(19) **Europäisches Patentamt**
**European Patent Office**
**Office européen des brevets**

(11) **EP 2 117 351 B1**

(12) # EUROPEAN PATENT SPECIFICATION

(45) Date of publication and mention
of the grant of the patent:
**21.12.2011  Bulletin 2011/51**

(51) Int Cl.:
***A23L 1/212*** *(2006.01)*    ***A23L 1/217*** *(2006.01)*

(21) Application number: **08702544.1**

(86) International application number:
**PCT/IB2008/050380**

(22) Date of filing: **31.01.2008**

(87) International publication number:
**WO 2008/093301 (07.08.2008 Gazette 2008/32)**

(54) **NUTRITIOUS FABRICATED SNACK PRODUCTS**

NAHRHAFTE KÜNSTLICHE SNACK-PRODUKTE

PRODUITS DE COLLATION NUTRITIFS FABRIQUÉS

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **01.02.2007  US 898774 P**

(43) Date of publication of application:
**18.11.2009  Bulletin 2009/47**

(73) Proprietor: **The Procter & Gamble Company
Cincinnati, OH 45202 (US)**

(72) Inventors:
• **EKANAYAKE, Athula
Cincinnati, Ohio 45249 (US)**
• **BUNKE, Paul, Ralph
Cincinnati, Ohio 45248 (US)**
• **HAMMOND, Priscilla, G
Cincinnati, Ohio 45240 (US)**

• **PROSISE, Robert, Lawrence
Cincinnati, Ohio 45241 (US)**
• **LIN, Peter, Yen-Chih
Cincinnati, Ohio 45249 (US)**
• **SCHNUR, Sharon, Lee
Fairfield, Ohio 45014 (US)**

(74) Representative: **Kellenberger, Jakob
NV Procter & Gamble
Services Company S.A.
Intellectual Property Department
Temselaan 100
1853 Strombeek-Bever (BE)**

(56) References cited:
**EP-A- 1 470 759    EP-A- 1 872 666
WO-A-96/01572    GB-A- 2 428 958
US-A- 3 703 378    US-A- 4 889 730
US-A- 5 523 106**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field

The present invention relates to nutritious fabricated snack products that have authentic flavor.

Background

Fabricated snack products prepared from dough comprising starch-based materials are well-known in the art. Potato based dough and the snacks made therefrom are especially well known. These doughs are typically fried in oil or baked to form a snack chip. Consumers are, however, looking for snack products that contain healthful ingredients other than starch materials. Moreover, consumers have demanded better flavor and nutrition in snack chips. While all age groups eat snacks, children are heavy consumers of these products, and it would be highly desirable if children could get more nutrition from a snack product that they enjoy eating. Even more desirable would be to produce a good tasting snack product without artificial flavors and preservatives. Even more preferred would be a snack product that can provide a full or half serving of fruit, vegetables, dairy, or protein (as defined in the USDA Food Guide Pyramid) in a serving, especially if the snack were low fat and had less than 125 calories.

For example, consumers like to have fruit and vegetable based snacks. Fruit and many vegetables as well as the dehydrated forms of these materials typically contain high levels of sugar and moisture. Snacks made from these products tend to burn when cooked and develop off flavors, particularly during frying, baking, extrusion and other thermal processing. Also, fruit and vegetable ingredient manufacturers usually pre-treat the initial products with preservatives such as sulfur dioxide, bisulfite materials, or organic acids such as ascorbic or citric acid. These preservatives can promote discoloration of the fruit or vegetable and increase the browning reactions during cooking and other processing steps. Moreover, these ingredients are unacceptable in natural products and those that claim to be "preservative free." For these reasons, fruit based snack products that are fried or cooked have proven difficult to make in a consumer acceptable format . Snach products comprising a dried agglomeration of fruit or vegetable pieces disclosed in US 4889730

Likewise, meats, cheeses, nuts, fish, whole grains, eggs, and other nutritional foods are equally desirable for use in snack foods, but they are also difficult to formulate in a consumer acceptable snack product. The oil content as well as protein or fiber content present a challenge in formulation.

More specifically, the relatively high temperatures and cooking times necessary to produce a thin, crisp snack product degrade the flavor of these nutritional additives such as, fruits, vegetables, meat, cheese, fish, and the like. The nutritional value of these materials is often degraded during the cooking process as well, particularly when extrusion or steaming is used during processing. Thus, commercially available snack chips fabricated from fresh fruit, vegetables, and the like lack the "authentic flavor" and nutritional value of the main ingredient.

"Authentic flavor" as used herein refers to consumer recognition of the flavor as the flavor of the nutritional component, such as, apple, tomato, carrot, shrimp, tuna, or even combined flavors such as salsa or pizza. For example, the flavor of a fabricated apple chip should taste like a fresh apple without the addition of artificial apple flavor. Likewise, a corn or shrimp based chip should taste like cooked corn or shrimp without the addition of artificial flavors.

There are many reasons for the degradation of the natural flavor and nutritional value in fabricated snack chips comprising fruits, vegetables, meats, cheeses, nuts, fish, whole grains, eggs, and the like. Many of these products are high in moisture, especially fresh fruit. But snack chips, even those made with fruit, must be low in moisture content to make them crisp and to maintain shelf stability without preservatives. While the water content of the dough can be controlled to some extent, the total moisture content of the snack product must be lowered. This dehydration is usually done by steaming, baking, or frying. If the snack chip is to be fried in hot oil, as most are, the dough must be relatively low in oil or fat before frying to remain low in total fat content as well as to meet the desired caloric content.

The binder in a fabricated chip is typically a starch material that is pregelled or heated as part of the processing. For example, shrimp chips are very popular in many countries. The comminuted shrimp is typically mixed with a bland starch material, for example, rice, and then the dough is cooked to at high temperatures to gelatinize the starch and cook the shrimp. This first step has a negative effect on the authenticity of the shrimp flavor and may degrade some of the nutrients as well. The dough is then dried into a "half-baked" product that is shelf stable. This drying can also be detrimental to the remaining flavor and nutrition of the product. Finally the half-baked product is cooked by frying, baking, microwaving, or the like, to make a crisp snack product.

In the past the addition of pieces of the nutritional food ingredients into a starch based dough, for example, pieces of fruit, vegetable, meat, cheese, and the like, resulted in a product with burnt pieces of the additive and often off-flavors. These products did not taste good and sometimes had dark or burnt specks.

Moreover, snacks that are formulated with high concentrations of non-starch ingredients have different textures in the finished product. The texture of the snack is a function of the temperature at which a glassy structure is obtained. The higher the glass transition temperature of the starch the crispier the texture would be. Depending on the non-starch ingredient used, the dough can be sticky and weak with low glass transition temperatures, which are difficult to process (sheeting, cutting, and frying). Ultimately, when this type of dough is cooked, the resulting snack is not crisp and often becomes stale quickly. Hence, there exists a need for formulae, doughs, and processes for making fabricated snack products with relatively high concentrations of non-starch ingredients, for example, fruits, vegetables, meats, cheeses, nuts, fish, whole grains, eggs, and the like, while maintaining certain textural and taste qualities that consumers prefer. The dough and snack need to be made from nutritional materials that have reduced sugar and moisture content. And there is a need for a fruit containing snack product that is made from a sheet of dough or extruded, and then fried, partially fried and then baked, or baked that tastes good.

These and other advantages of the invention will become apparent from the following disclosure.

Summary

Embodiments of the present invention provide a snack chip comprising: from about 10% to about 50% of nutritional material; from about 0% to about 25% oatmeal; from about 25% to about 90% of starch material selected from the group consisting of tapioca, rice, and mixtures thereof; from about 0.1 % to about 5.0% water; and from about 1% to about 20% of optional ingredients. Further, at least about 40% of the starch material used in the snack chips of some embodiments of this invention can be pre-gelatinized. The optional ingredients can be selected from the group consisting of natural or artificial flavors, flavor enhancers, fats and oils, natural sweeteners, artificial sweeteners, non-digestible fats or oils, vitamin or minerals, and mixtures thereof. Typically, salt, sugar, cinnamon, butter, artificial butter or spice flavors, artificial sweeteners, oil, and fruit pieces can be used.

In another aspect of the present invention the snack chip can be made by combining dry ingredients with water to form a sheetable dough. The dough can be mixed and sheeted without passing through a cooking extruder. The sheeted dough can be cut and dried to form a fabricated snack product or "half product." The dough can be dried at a temperature of less than about 121.1°C (250° F) Half products are shelf stable and can be stored and cooked later. The half product can also be cooked immediately after the drying process to form the snack chip by baking, frying in oil, vacuum, microwave, and mixtures of these methods.

Another aspect of the present invention delivers a snack chip that has a high concentration of nutritional dairy, fruit, vegetable, and meat or protein ingredients. For example, snack chips with fruits, vegetables, meats, cheeses, nuts, fish, whole grains, eggs, and the like, wherein the snack chip retains both the authentic and natural flavors and nutritional benefits of the non-starch ingredient, are desired. Moreover, snack chips of some embodiments of the present invention provide consumer acceptable taste without the need for added artificial flavors to mimic the main the natural ingredient. They can be preferably formulated to provide a full or half serving of fruit, vegetable, dairy or protein (as defined by the United States Center for Disease Control, Atlanta, Georgia) in a single serving of snack chips and at less than 125 calories per serving. The snack chips of some embodiments of this invention have a crispy and crunchy texture and appealing appearance to consumers. Further, the dough and snacks made therefrom are low in off-flavors.

Detailed Description

A. DEFINITIONS

As used herein "gelatinized starch" includes any type of starch that has been treated to gelatinize the starch. Processed or commercial starches have had most of the moisture removed, and they are generally insoluble in water. As starch and water are heated, the grains or granules absorb water. Generally, up to 60° to 70°C, this absorption is reversible. However as heating is continued the swelling of the granule is irreversible, and gelatinization begins. The exact gelatinization temperature is dependent on the starch. Gelatinization is usually evidenced by increased translucency of the starch and increased viscosity of the solution. Starch also loses its birefringence when gelatinized.

Gelatinized starches as used herein include fully gelatinized, partially gelatinized, and pregelatinized starches. Gelatinized starches can include, but are not limited to, those which have been treated by parboiling, cooking, partially cooking, and extruded flours.

As used herein, "pre-gelatinized" means the starch has been treated to gelatinize it. Pregelatinized starch is usually a dry powder. Pre-gelatinizing is done before the starch is used to make the dough.

As used herein "dehydrated fruit materials" refers to raw materials or any intermediate source of fruit with a moisture content below 15%. Examples are fruit based flour, fruit based pellets, extruded fruit products, dried fruit pieces, vacuum fried fruit pieces, air puffed fruit containing pieces, and combinations thereof.

As used herein "nutritional additives" refers to any food that is part of the USDA Food Guide Pyramid. These include fruits, vegetables, proteins or meats, dairy products, and fats. Fiber enriched foods are also nutritional additives. These nutritional additives may be dehydrated to a moisture content of less than about 15%.

As used herein, the term "fabricated" refers to food products made from doughs comprising flour, meal, and/or starch, such as those derived from tubers, grains, legumes, cereals, or mixtures thereof. For example, a potato chip that is prepared by frying a portion of a potato is not fabricated, but a potato chip made of potato flakes and starch made into a dough piece that is fried is a fabricated potato chip.

As used herein, "native starch" refers to starch that has not been pre-treated or cooked in any way, and includes but is not limited to hybrid starches.

As used herein, "dehydrated potato products" includes, but is not limited to, potato flakes, potato flanules, potato granules, potato agglomerates, any other dehydrated potato material, and mixtures thereof.

As used herein, "sheetable dough" is cohesive dough capable of being placed on a smooth surface and rolled to the desired final thickness without tearing or forming holes. Sheetable dough can also include dough that is capable of being formed into a sheet by rolling or pressing between two belts or through a low work, low temperature process.

As used herein, "starch" refers to a native or an unmoditied carbohydrate polymer containing both amylose and amylopectin. It is derived from legumes, grain, and tubers such as, but not limited to, wheat, corn, tapioca, sago, rice, potato, oat, barley, and amaranth. Starch as used herein also refers to modified starch including but not limited to hydrolyzed starches such as maltodextrins, high amylose corn maize, high amylopectin corn maize, pure amylose, chemically substituted starches, crosslinked starches, and other modifications including but not limited to chemical, physical, thermal or enzymatic, and mixtures thereof.

As used herein, "starch-based flour" refers to starch, in either natural, dehydrated (e.g., flakes, granules, meal) or flour form. Starch-based flour can include, but is not limited to, potato flour, potato granules, potato flanules, potato flakes, corn flour, masa corn flour, corn grits, corn meal, rice flour, buckwheat flour, oat flour, bean flour, barley flour, tapioca, and mixtures thereof. For example, the starch-based flour can be derived from tubers, legumes, grain, or mixtures thereof.

As used herein the term "emulsifier" refers to emulsifier that has been added to the dough ingredients. Emulsifiers that are inherently present in the dough ingredients, such as in the case of the potato flakes (where emulsifier is used as a processing aid during manufacturing), are not included in the term "emulsifier."

The terms "fat" and "oil" are used interchangeably herein unless otherwise specified. The terms "fat" or "oil" refer to edible fatty substances in a general sense, including natural or synthetic fats and oils consisting essentially of triglycerides, such as for example soybean oil, corn oil, cottonseed oil, sunflower oil, palm oil, coconut oil, canola oil, fish oil, lard and tallow, which may have been partially or completely hydrogenated or modified otherwise, as well as non-toxic fatty materials having properties similar to triglycerides, herein referred to as non-digestible fats, which materials may be partially or fully indigestible. Reduced calorie fats and edible non-digestible fats, oils, or fat substitutes are also included in the term.

The term "non-digestible fat" refers to those edible fatty materials that are partially or totally indigestible, e.g., polyol fatty acid polyesters, such as OLEAN™. The preferred non-digestible fats are fatty materials having properties similar to triglycerides, such as sucrose polyesters. These preferred non-digestible fats are described in U.S. Patent No. 5,085,884, issued February 4, 1992 to Young et al. and U.S. Patent No. 5,422,131, issued June 6, 1995 to Elsen et al. An especially preferred brand of non-digestible fats is sold under the trade name OLEAN™.

By the term "dry blend" it is meant herein the dry raw material mixed together prior to processing of the materials so mixed.

All percentages are by weight unless otherwise specified.

B. SNACK CHIPS

Embodiments of the present invention deliver a snack that has a high concentration of dehydrated and optionally fresh nutritional ingredients. They are preferably formulated to also provide greater than half and more preferably greater than one serving of fruit, vegetable, dairy, or protein (as defined by the United States Center for Disease Control, Atlanta, Georgia) in a single 28 gram serving of snack and at less than 125 calories per serving. Embodiments of the present invention also deliver, for example, fruits, vegetables, meats, cheeses, nuts, fish, whole grains, eggs, and the like, in a snack that provides a natural flavor and a nutritional benefit from the ingredients. Moreover, the nutritional snacks of some aspects of the present invention can be formulated without a need for added flavors to mimic the main natural ingredient. The snacks of some aspects of this invention can have a crispy and crunchy texture and an appealing appearance to consumers. Further, the dough and snacks made therefrom can be low in off-flavors.

"Snack" and "Snack chip" are used interchangeably throughout and mean a product consumable by humans and other animals. Non-limiting examples of snacks and snack chips include products such as breads, crackers, fried snacks, fruit and vegetable snacks, baked or dried snacks, baby foods, dog foods, dog biscuits, other companion treats or food, and any other suitable food product.

The present fruit snacks comprise:

(a) from about 10% to about 50% of dehydrated fruit material;

# EP 2 117 351 B1

(b) from about 0% to about 25% oatmeal;
(c) from about 25% to about 90% of starch selected from the group consisting of tapioca, rice and mixtures thereof;
(d) from about 0.1% to about 5.0%, preferably from about 0.2% to about 4%, and more preferably from about 0.3% to about 3%, by weight, water; and
(e) from about 1% to about 20% of optional ingredients

The snacks are preferably made by combining dry ingredients with water to form a dough, which is then sheeted. The sheeted dough can be dried to form a fabricated snack product or "half product," which is a shelf stable intermediate. The mixing and drying can be done using low work input and drying temperatures below 250°C. The fabricated snack product can be cooked by baking, frying in oil, vacuum, microwave and mixtures of these to make the nutritional snack. The snack chip can expand during the final cooking to provide a crisp texture.

C. DEHYDRATED FRUIT MATERIAL

The dehydrated fruit material can be preferably selected from the group consisting of apple based flour, strawberry based flour, banana based flour, pear based flour, apricot based flour, cranberry based flour, any dry fruit, and mixtures thereof. Preferably, the dehydrated fruit material includes apple based flour, and even more preferably, pieces of fruit, for example apple pieces that can be added to the dough. Preferably, the dehydrated fruit material can be at least about 90% or more apple based flour. And, even more preferably, at least 70% or more of the apple cells are broken. However, more or less cell breakage can be utilized and is dependent on the size of the piece of fruit. For example, a larger piece of fruit may only need 40%, 50%, or 60% cell breakage for more flavor.

It is also preferred that the dehydrated fruit materials be dried to a moisture content no higher than 15%. Also, the fruit can be ground to a specific particle size distribution (from flour to agglomerates, pieces, extrudates and co-extrudates). The level of dehydrated fruit materials in the formula varies from about 10% to about 50%, preferably from about 25% to about 40%, and more preferably from about 25% to about 35%, by weight of the dry ingredients.

Preferably the particle size is such that at least 75% of the particles pass through a 90 mesh screen.

The dehydrated fruit materials can be supplemented or flavored with natural or artificial flavors, juices, purees, and the like. Other dehydrated fruit materials are appropriate for use herein as described above. Examples of suitable fruit based flours, their source and exemplary properties are given in Tables B1 and B2 below.

TABLE B1

| Material | Supplier | Location |
|---|---|---|
| Apple Powder low $SO_2$ | Surfrut | Santiago, Chile |
| Apple Powder | FDP USA, Inc. | Santa Rosa, CA. |
| Apple Powder | Agrocepia | Talca, Chile |
| Apple Powder without skin | Agrocepia | Talca, Chile |
| Fruit sensations (fruit flavored intermediate moisture apple dices) | Treetop | Selah, WA |
| Diced apple | Agrocepia | Talca, Chile |
| Apple Powder (sample treated with ascorbic acid) | Agrocepia | Talca, Chile |
| Apple powder chop (with skin) | Treetop | Selah, WA |
| Apple powder | Treetop | Selah, WA |
| Banana Flakes | Confoco | Ecuador |
| Banana powder | Confoco | Ecuador |
| Strawberry flour | Mercer | Carmel, CA |

TABLE B2

| Proximate Analysis* (%) | Strawberry Flour Mercer Processing, Inc. Modesto, CA. | Apple Flour Treetop, Selah, WA. |
|---|---|---|
| Water * | 3 | 2.8 |

(continued)

| Proximate Analysis* (%) | Strawberry Flour Mercer Processing, Inc. Modesto, CA. | Apple Flour Treetop, Selah, WA. |
|---|---|---|
| Sugars * | 41.3 | 69.2 |
| Protein * | 7.1 | 2.0 |
| Total Fat * | 4.3 | 0.3 |
| Total Carbohydrates * | 80.7 | 92.0 |
| Dietary Fiber * | 6.1 | 6.2 |
| | | |
| Potassium (mg) * | 1,642.5 | 620 |
| Calcium (mg) * | 177.6 | 34 |
| | | |
| Vitamin C (mg) * | 457.2 | 11.3 |
| Vitamin A (IU) * | 499.4 | 101.0 |
| | | |
| Particle Size Distribution | 90% through mesh #20 | 90% through mesh #20 |
| * Information provided by suppliers | | |

Fruit purees can also be used to make the dough. When purees are used, the size of the particles should be similar to that in the dehydrated particle distribution. When fruit puree is used, the added water content of the dough can be adjusted to accommodate the water in the puree.

To maximize the benefits of adding dehydrated fruit materials to the fabricated snacks of some embodiments of the present invention, a rice based material, as defined directly below, can be included in the dough. The rice based material, which is preferably extruded or precooked, along with optional starches, aid in the expansion of the final snack chip.

D. STARCH MATERIALS

As discussed above, to maximize the benefits of the dehydrated fruit materials, the dough of at least one embodiment of the present invention can include from about 25%, to about 90%, preferably, from about 40% to about 60%, and more preferably from about 45% to about 55%, by weight of the snack chip of starch material made from materials selected from the group consisting of tapioca, rice and mixtures thereof.

The starch material helps to create the authentic fruit flavor of the fruit snack of some embodiments of the present invention. Moreover, rice and tapioca based starch provide a neutral and clean flavor allowing the fruit flavor to come through easier. Rice and tapioca have naturally bland flavors that do not mask the fruit flavor like corn or potato flours will.

Further, at least about 40% of the starch material used in the snack chips of some embodiments of this invention can be pre-gelatinized. That is, at least a portion of the starch can be cooked before adding the non-starch ingredients. Prior fabrications and formulae allowed for mixing the main ingredients and the starch and then cooking, that is, gelatinizing them both in-situ. In-situ gelatinization requires that the dough have very high moisture content, or that moisture loss be controlled by pressure cooking or other methods know in the art. Regardless, the harsh conditions of in-situ gelatinization tend to destroy flavor, and it is believed that the nutritional value of the non-starch ingredients is degraded as well.

While not wanting to be bound by any one theory, it is believed that in-situ gelatinization with, for example steam, breaks down the starch cells and frees up the amylose within the cells. The amylose may complex with flavor components resulting in a trapping of the flavor components. Moreover, in-situ gelatinization can cause the snack chip to be puffy and have unacceptable texture for consumers. In pre-gelatinized starch, the cells are largely intact.

The starch materials can serve also as processing and formulation additives that provide a better dough, resulting in a superior sheeted product from which the fabricated snack piece can be made.

Additional starch materials that can be used in some aspects of the present invention include, but are not limited to, conventional rice flour, conventional tapioca flour, pre-gelatinized starches, low viscosity starches (e.g., dextrins, acid-modified starches, oxidized starches, enzyme modified starches), stabilized starches (e.g., starch esters, starch ethers), waxy rice starch or flour, cross-linked starches, acetylated starches, starch sugars (e.g. glucose syrup, dextrose, isoglucose), starches that have received a combination of treatments (e.g., cross-linking and gelatinization), and mixtures thereof. Those skilled in the art will appreciate that the starch materials described herein are commercially available, for example, from Remy Industries N.V., Remylaan 4, B-3018 Leuven-Wijgmaal, Belgium. The conventional rice flour includes long grain, medium grain, short grain, and sweet or grain rice and can all be made into rice flour. In addition, rice flour can be made from broken pieces or whole pieces of rice. Rice flours made from these different types of rice vary in water absorption index, peak viscosity, final viscosity, and total amylose content. Furthermore, if the rice is partially or fully pre-cooked, parboiled, or pregelatinized in any other way prior to, or after, processing into rice flour, the rice flour properties can be further modified.

Mixing together the desired quantities of various rice flours can be used to make the desired starch materials. This mixing can be accomplished by any suitable means such as, but not limited to, mixing the grains before milling, or mixing the flours together after milling.

In one embodiment, gelatinized tapioca flour is used. In this embodiment, the composition can comprise a blend of one or more tapioca flours that have been gelatinized to varying degrees. For example, the gelatinized tapioca flour can comprise fully cooked tapioca, partially cooked tapioca, parboiled tapioca, extruded tapioca, or mixtures thereof. All of these methods are equally applicable to rice and rice/tapioca blends. The fully cooked gelatinized rice or tapioca flour is from about 75% to about 100% gelatinized, the partially cooked rice flour and the extruded rice flour is from about 25% to about 100% gelatinized, and the parboiled rice flour is from about 75% to about 100% gelatinized.

Extrusion is can be one method of gelatinizing the tapioca or rice flour for some embodiments of this invention. Extrusion provides the cooking conditions required for the starch of the rice or tapioca flour to completely cook, resulting in complete gelatinization and high levels of dextrinization of the starch-i.e., starch degradation. The use of extrusion to prepare the rice flours for some embodiments of this invention guarantees the absence of a raw starch taste or the powdery starchy aftertaste and the uncontrolled and excessive expansion in the finished product. As is discussed below, extrusion is not desired for use in drying the dough or cooking the snack chip. While extrusion can be used on the starch alone, is believed to degrade both the flavor and the nutritional value of the non-starch ingredients, in this case the added fruit ingredient.

Optionally, an emulsifier can be added to the starch material as a processing aide to complex the free amylose generated during cooking and/or milling. For example, monoglycerides can be added at a level ranging from about 0.2 to about 0.7%, and preferably from about 0.3% to about 0.5% (on a dry solids basis).

The starch materials can be ground to a wide range of particle size distribution. In a particular embodiment, the composition has a particle size distribution such that about 35% of the starch materials remains on a US #100 mesh. In another preferred embodiment, the starch materials have a particle size distribution wherein from about 5% to about 30% remains on a 60 mesh screen, from about 15% to about 50% remains on a 100 mesh screen, and from about 20% to about 60% remains on a 200 mesh screen. Particle size distribution of the starch materials is important to ensure proper hydration during mixing. Also, the particle size distribution has an effect on texture; large particles in the starch materials will contribute to slow melting and tooth packing.

C. FABRICATED SNACK PRODUCT PREPARATION

The "fabricated snack product" of some embodiments of the present invention is a "half-product". That means that it is dried, shelf stable, and ready to cook. While the fabricated snack product can be consumed at this point, it is not in a consumer desirable form. More specifically, the taste and texture of a half-baked product is not so good.

The fabricated snack product of some embodiments of the present invention is made by combining dry ingredients with water to form a dough that is then sheeted and dried. The drying can be done without extrusion, and at a temperature of less than about 250 F. To form the snack chip of some embodiments of the present invention, the half-baked fabricated snack product can be cooked by any of the methods discussed herein, although extrusion is not preferred for reasons discussed above.

As discussed above, the present snacks provide substantial nutrition in a consumer acceptable format. That is, the present snacks are both tasty and nutritious. The present combination of composition and processing results in a snack that retains more nutritional elements, more flavor components, and produces fewer off-flavors. By way of example, a snack chip made according to some embodiments of this invention with fresh or dehydrated apples will retain more of the essential nutrients of the original apple material than prior snacks. Likewise, important and desirable flavor notes of the apple are retained in greater quantities by the compositions and processes of some embodiments of the present invention.

Although the use of the dehydrated fruit materials in combination with the starch materials will be described primarily in terms of a preferred fabricated snack product, it should be readily apparent to one skilled in the art that the dough formed with these compositions can be used in the production of any suitable food products. For instance, the dough can be used to produce food products such as breads, sauces, crackers, fried snacks, fruit and vegetable snacks, baked or dried snacks, coatings for fried foods, baby foods, dog foods, dog biscuits, other companion foods, and any other suitable food product. The production of one embodiment of a fabricated snack product is set forth in detail below.

## 1. DOUGH FORMULATION

The preferred doughs of some embodiments of the present invention comprise a dry blend and added water. In one embodiment, the doughs comprise from about 60% to about 85% dry blend and from about 15% to about 40% added water. Preferably the added water is between about 15% and 35%, and even more preferably between about 15% and about 30%, by weight of the dough. The dough can further comprise optional ingredients, including those that decrease the moisture content of the dough. For example, to lower the moisture content in the dough, the following ingredients can be added: 1) hydrolyzed starches into the dough, such as maltodextrins with low dextrose equivalent values; 2) polysaccharides such as Xanthenes, hydroxypropyl cellulose, and combinations; and 3) emulsifiers.

## a. DRY BLEND

Preferred doughs comprise from about 60% to about 85% dry blend, preferably from about 65% to about 75% dry blend. Preferably the dry blend has a particle size distribution wherein from about 5% to about 30% remains on a 60 mesh screen, from about 15% to about 50% remains on a 100 mesh screen, and from about 20% to about 60% remains on a 200 mesh screen.

The dry blend comprises the dehydrated fruit materials, the starch materials, and optional dry ingredients discussed below. Preferred dry blends comprise from about 20% to about 50%, by weight of the dry ingredients, dehydrated fruit materials; from about 40% to about 60%, by weight of the dry ingredients, starch material; and from 1% to about 30%, by weight of the dry ingredients, optional ingredients. Furthermore, the balance of the dry blend can comprise one or more other components including but not limited to, protein sources, fiber, minerals, vitamins, colorants, flavors, fruits pieces, vegetables, seeds, herbs, spices, and mixtures thereof. It is sometimes beneficial to coat these other components before they are added to the dry blend.

## b. ADDED WATER

Preferred dough compositions of some embodiments of the present invention comprise from about 15% to about 40% added water, preferably from about 15% to about 35%, and more preferably from about 15% to about 30% added water. If optional ingredients, such as maltodextrin or corn syrup solids, juices, concentrates, are added as a solution, the water in the solution is included as added water. The amount of added water also includes any water used to dissolve or disperse ingredients.

## c. OPTIONAL INGREDIENTS

Any suitable optional ingredient may be added to the doughs of some embodiments of the present invention. Such optional ingredients can include, but are not limited to polysaccharides such as: gums and fibers, emulsifiers, and mixtures thereof. Optional ingredients are preferably included at a level ranging from about 0% to about 50%, preferably, 0% to about 40%, by weight in the dough. Examples of suitable gums can be found in U.S. Patent No. 6,558,730, issued May 6, 2003, to Gizaw et al. Optional ingredients include, but are not limited to, vegetables (e.g. tomatoes, carrots, peppers, and the like) and legume sources (e.g. pinto beans, garbanzo beans, green peas, and the like).

The preferred optional ingredient is oatmeal, which may be present at from 0% to about 25%, preferably, from about 5% to about 20% of the snack chip. Other optional ingredients are selected from the group consisting of salt, sugar, cinnamon, butter, artificial flavors, artificial sweeteners, oil, fruit pieces, and mixtures thereof.

Additional starch materials may be added also, for example, oat, wheat, rye, barley, corn, masa, cassava, non-masa corn, peanut, dehydrated potato products (e.g., dehydrated potato flakes, potato granules, potato flanules, mashed potato materials, and dried potato products), as well as leguminoses, such as beans, chickpeas, and combinations of thereof. These other starch materials can be blended to make snacks of different compositions, textures, and flavors.

An ingredient that can optionally be added to the dough to aid in its processability is one or more emulsifiers. The addition of an emulsifier to the dough reduces the stickiness of the dough which minimizes sticking to the sheeting rolls, belts, and the like. Emulsifiers also have an effect on the texture of the final product, wherein higher levels of emulsifier result in denser finished products. An emulsifier is preferably added to the dough composition prior to sheeting the dough. The emulsifier can be dissolved in a fat or in a polyol fatty acid polyester such as Olean™. Suitable emulsifiers include lecithin, mono- and diglycerides, diacetyl tartaric acid esters and propylene glycol mono- and diesters and polyglcerol esters. Polyglycerol emulsifiers such as monoesters of hexaglycerols, can be used. Particularly preferred monoglycerides are sold under the trade names of Dimodan available form Danisco®, New Century, Kansas and DMG 70, available from Archer Daniels Midlands Company, Decatur, Illinois.

When calculating the level of optional ingredients according to some embodiments of the present invention, that level of optional ingredient which may be inherent in the dehydrated fruit materials and starch material is not included.

## 2. DOUGH PREPARATION

The doughs of some embodiments of the present invention can be prepared by any suitable method for forming sheetable doughs. Typically, a loose, dry dough is prepared by thoroughly mixing together the ingredients using conventional mixers. Preferably, a pre-blend of the wet ingredients and a pre-blend of the dry ingredients are prepared; the wet pre-blend and the dry pre-blend are then mixed together to form the dough. Hobart® mixers are preferred for batch operations and Turbulizer® mixers are preferred for continuous mixing operations. Alternatively, extruders can be used to mix the dough and to form sheets or shaped pieces.

### a. SHEETING

Once prepared, the dough is then formed into a relatively flat, thin sheet. Any method suitable for forming such sheets from starch-based doughs can be used. For example, the sheet can be rolled out between two counter rotating cylindrical rollers to obtain a uniform, relatively thin sheet of dough material. Any conventional sheeting, milling and gauging equipment can be used. The mill rolls should preferably be cooled to from about 5°C to about 45°C. In a preferred embodiment, the mill rolls are kept at two different temperatures. The dough can also be formed into a sheet by a form extrusion device that does not cook the dough.

Doughs of some embodiments of the present invention are usually formed into a sheet having a thickness ranging from about 0.015 to about 0.10 inches (from about 0.038 to about 0.25 cm), and preferably to a thickness ranging from about 0.019 to about 0.05 inches (from about 0.048 to about 0.127 cm), and most preferably from about 0.02 inches to about 0.03 inches (0.051 to 0.076 cm).

Dough sheets of some embodiments of the present invention have a sheet strength of from about 80 gf to about 400 gf, preferably from about 85 gf to about 300 gf, and more preferably from about95 gf to about 150 gf. Moreover, the dough of some embodiments of the present invention is strong even when sheeted to very low thickness and high levels of dehydrated fruit materials. The sheet strength increases as the level of dehydrated fruit materials decreases. The rice and tapioca based starches enable the incorporation of dehydrated fruit materials into the formulation of snacks due to their ability to increase sheet strength. The present rice and tapioca flour composition is an excellent carrier for food pieces in the dough, for example, pieces of fruit, vegetables, whole grains, nuts and the like.

The dough sheet is then formed into snack pieces of a predetermined size and shape. The snack pieces can be formed using any suitable stamping or cutting equipment. The snack pieces can be formed into a variety of shapes. For example, the snack pieces can be in the shape of ovals, squares, circles, a bowtie, a star wheel, or a pin wheel. The pieces can be scored to make rippled chips as described by Dawes et al. in PCT Application No. PCT/US95/07610, published January 25, 1996 as WO 96/01572.

### b. DRYING

The snack pieces cut from the sheeted dough described above are then dried to make the half-product fabricated snack product described above. The drying process is preferably a slow gentle process that does not degrade the authentic flavor and nutritional value of the non-starch ingredients. Any of a number of methods of drying can be used, for example, baking, vacuum drying, microwave heating, and mixtures of these is also acceptable. Little or no gelatinization of the starch occurs at this step. This is another reason that at least a portion of the starch materials must be gelatinized before forming and drying the dough. Moreover, gelatinization of the starch will not occur during drying because the moisture content of the dough is too low. As discussed above, high moisture content is a necessary part of the gelatinization process. But in the present processes, the moisture is kept low to form a good sheeted product and to minimize the time and energy necessary for drying.

### c. COOKING

After the half-baked fabricated snack products are formed they can be cooked to form a crisp snack chip. The fabricated snack products can be fried, for example, in a fat composition comprising digestible fat, non-digestible fat, or mixtures thereof. For best results, clean frying oil should be used. The free fatty acid content of the oil should preferably be maintained at less than about 1%, more preferably less than about 0.3%, in order to reduce the oil oxidation rate. Any other method of cooking, such as baking, vacuum drying, microwave heating, and mixtures of these, is also acceptable. When the snack chips are cooked by a method other than frying in oil, it is often desirable to add some oil to the dough as an optional ingredient as described above. Oil can be added to snack chips that are fried as well.

Preferably, the fabricated snack product is cooked to form a fruit based snack chip having a chip fracture strength from about 75 to about 500 gf, preferably from about 180 to about 280 gf, and most preferably from about 200 to about 300 gf. And it is also preferred that when the fabricated snack product of some embodiments of the present invention is fried in oil, the resulting fruit based chip has a density of from about 0.3 to 1.0g/ml, preferably from 0.4 to 0.9, and more preferably from 0.4 to 0.8 g/ml.

The flavor and texture of the fruit based snack chip of some embodiments of this invention are the result of making them from a dough sheet that is relatively thin, preferably only 0.018 - 0.055 inches (0.046cm to 0.14cm) and formulated with low levels of moisture in the dough as described above. This low level of water and the presence of the starch materials in the formula, allows the frying time to be substantially reduced to achieve the desirable texture. That is, because the dehydrated fruit materials are dried, the starch material is partially pre-gelatinized, the frying energy required is minimum, and there is lower fat adsorption during the abbreviated cooking process. Also, because of the low level of water used in the dough making process, the level of fat content of the chip will be lower than a typical fried snack. The fruit based snack chip from some embodiments of this invention has a range in total fat content from 10 to 29%, preferably from 15 to 25%.

In one embodiment of this invention the dough is made into a fabricated snack product that is dried using microwave heating and then fried to a density from about 0.4 to about 1.0 g/ml.

In a preferred embodiment of the present invention, the frying oil has less than about 30% saturated fat, preferably less than about 25%, and most preferably, less than about 20%. This type of oil improves the lubricity of the finished snack chips such that the finished snack chips have an enhanced flavor display. The flavor profile of these oils also enhance the flavor profile of topically seasoned products because of the oils' lower melting point. Examples of such oils include sunflower oil containing medium to high levels of oleic acid.

In another embodiment of the present invention, the fabricated snack products are fried in a blend of non-digestible fat and digestible fat. Preferably, the blend comprises from about 20% to about 90% non-digestible fat and from about 10% to about 80% digestible fat, more preferably from about 50% to about 90% non-digestible fat and from about 10% to about 50% digestible fat, and still more preferably from about 70% to about 85% non-digestible fat and from about 15% to about 30% digestible fat. Other ingredients known in the art can also be added to the edible fats and oils, including antioxidants such as TBHQ, tocopherols, ascorbic acid, chelating agents such as citric acid, and anti-foaming agents such as dimethylpolysiloxane.

In another embodiment of the present invention, the fabricated snack products are fried in oils with low levels of saturated fat, such as high oleic sunflower oil, corn oil, rice oil, mid oleic sunflower oil, palm oil and mixtures thereof.

It is preferred to fry the fabricated snack products at temperatures of from about 275°F (135°C) to about 420°F (215°C), preferably from about 300°F (149°C) to about 410°F (210°C), and more preferably from about 350°F (177°C) to about 400°F (204°C) for a time sufficient to form a product having about 6% or less moisture, preferably from about 0.5% to about 4%, and more preferably from about 1% to about 3% moisture.

Preferably, the fabricated snack products are fried in oil using a continuous frying method and are constrained during frying. This constrained frying method and apparatus is described in U.S. Patent No. 3,626,466 issued December 7, 1971 to Liepa. The shaped, constrained snack pieces are passed through the frying medium until they are fried to a crisp state with a final moisture content of from about 0.5% to about 4%, preferably from about 1% to about 2.5%.

Any other method of frying, such as continuous frying or batch frying of the fabricated snack products in a non-constrained mode, is also acceptable. For example, the snack pieces can be immersed in the frying fat on a moving belt or basket. Likewise, frying can occur in a semi-constrained process. For example, the fabricated snack products can be held between two belts while being fried in oil.

Oils with characteristic flavor or highly unsaturated oils can be sprayed, tumbled or otherwise applied onto the fabricated snack products after frying. Preferably triglyceride oils and non-digestible fats are used as a carrier to flavors and are added topically to the fabricated snack products. These include, but are not limited to, butter flavored oils, natural or artificial flavored oils, herb oils, and oils with potato, garlic, or onion flavors added. This method can be used to introduce oils which would ordinarily undergo polymerization or oxidation during the heating necessary to cook the snacks.

The fat content of the finished snack chips of some embodiments of this invention ranges from about 0 grams to about 9 grams per a 28 gram serving of chips. Preferably the fat content of the snack chip is less than about 7g of fat per a 28 gram serving of chips This content represents approximately 20 to 50% reduction in the fat content when compared to a chip processed under similar conditions but comprising potato flour, which is typically of 11g per 28 g serving.

## D. PRODUCT CHARACTERISTICS AND ANALYTICAL METHODS

### 1. CHIP DENSITY TEST PROCEDURE

The density of the snack product is performed by means of Archimedes' principle (buoyancy method), Density is used in many areas to characterize certain properties of a product or material. The buoyancy method is a technique for measuring the bulk volume of a sample by submerging it in a bath of glycerin and observing the increase in weight of the bath, following Archimedes principle.

Fill a container with enough glycerine to submerge the sample. Submerge a clip in glycerine so that the fine wire is at the interface, and tare the scale.
Carefully determine the weight of each sample with a balance. This weight determination should be made prior to the samples picking up a significant weight of water when exposed to the environment.

Attach the sample to clip and fully submerge in the glycerine, including clip. Make sure the sample does not touch the walls of the vessel. Record the weight. Repeat using 5 different samples times. Calculate density from the following equation:

$$Ds = Df \ X \ Ws / (Ws\text{-}F)$$

Where:

- Ds = Density of Specimen
- Df = Density of Fluid (Glycerine = 1.262)
- Ws = Weight of Specimen Before Submerging
- F = Reading on Scale with Specimen Submerged

An average of the 5 density readings is used.

DIAGRAM OF DENSITY EQUIPMENT SETUP

### 2. % FAT ANALYSIS

The percent of total fat in a chip can be measured by standard procedures known to those in the food arts, preferably, the total fat is measured by acid hydrolysis. Specifically, the method for measuring total fat by acid hydrolysis can be found in AOAC International (2000) 17th edition AOAC International, Gaithersburg, MD, USA, Official Methods 922.06, 954.02.

### 3. WATER ACTIVITY

Method:

1) Ensure that the temperature gauge on the DT unit displays 25±0.1°C If not adjust water bath thermometer until the display shows 25±0.1°C
2) Put sample in sample cup to cover base up to about 2-3 mm.
3) Put sample cup containing sample in the measuring cell and turn lever all the way to the right to isolate the measuring chamber
4) Wait requisite amount of time until readings stabilize (Only the displays are lit up)-typically 45 min. to a few hrs.
5) Record measurement and remove sample cup from measuring chamber
6) In case of spillage, clean chamber with distilled water and air dry

E. EXAMPLES 1-5

Particular embodiments of the present invention are illustrated by the following non-limiting examples. The following examples were made by a lab bench process.

Table 1 lists the composition and their amounts for four apple based snacks according to at least one embodiment of the present invention. Example 1 is an apple oatmeal snack chip.

An apple-oatmeal chip is made by first grinding the tapioca such that it passes through a US #30 mesh sieve. The oats are hydrated with a portion of the water and microwaved. The apple powder is then hydrated with water and both the hydrated oats and hydrated apple powder is mixed in a mixer. Salt, cinnamon, splenda, butter flavor and sugars were blended to form a pre-blend. The pre-blend is slowly added to the apple/oat mixture and mixed for about 1 minute. The starch is slowly added and the ingredients are mixed for approximately 1 minute. The remaining water is heated and added. Mixing is continued for approximately 2 additional minutes. The total mixture is placed into a Cuisinart© mixer and mixed for approximately 30 seconds until starch is completely blended and a dough is formed.

The dough is then rolled, using a rolling pin, between wax paper to a thickness of from about .035 to about 0.40. Circle approximately 2 inches in diameter are cut from the sheeted dough. The circles are placed on stainless steel trays place in Lang forced air oven at about 93.3°C (200 °F) to a moisture of 10% and the water activity is less than about 0.85 to produce a half product.

The half product is finished by baking in an oven. The final product has water activity of about .64

TABLE 1

EXAMPLE Nos. 1-4

| Ingredients | Mfg. and Ref # | 1 Dry Wt. % | 2 Dry Wt. % | 3 Dry Wt.% | 4 Dry wt. % |
|---|---|---|---|---|---|
| One Minute Oats | Quaker 100% Whole Grain Mar0307L108 | 18.29 | 0.00 | 18.29 | 9.15 |
| Water | Milli Pore | 0.00 | 0.00 | 0.00 | 0.00 |
| Whole Apple Powder | Agvest/Nigara 425175-03 A-120 | 25.20 | 33.88 | 25.19 | 25.20 |
| Salt | Mortons 1 7B5BA1 non iodized | 0.79 | 0.79 | 0.79 | 0.79 |
| Cinnamon | Korgers Ground Aug 09 08GB | 2.27 | 2.27 | 2.27 | 2.27 |
| Splenda | McMeil Nutritionals PPC 72460 8724611 | 2.15 | 2.15 | 2.83 | 2.15 |
| Butter Flavor | Butter Buds TPK213A | | | | |
| Granules Dark Brown | Cumberland Packing Co | 0.23 | 0.23 | 0.23 | 0.23 |
| Sugar | Domino 49200 05791 | 2.87 | 2.87 | 0.00 | 2.87 |
| Domino Sugar | Domino 04-655302-11/03 | 2.73 | 2.73 | 0.00 | 2.73 |
| Tapioca Starch <30 mesh | Kraft KFI 11800 80000 | 45.46 | 55.07 | 50.39 | 54.61 |

Example 5 is an apple and oatmeal chip that includes native potato starch (not gelatinized) in addition to pre-gelatinized tapioca starch. The concentrations of ingredients for Example 5 are listed in Table 2.

TABLE 2

EXAMPLE No. 5

| Ingredients | Mfg. and Ref # | 5 Dry Wt. % |
|---|---|---|
| One Minute Oats | Quaker 100% Whole Grain Mar0307L108 | 18.29 |
| Water | Milli Pore | 0.00 |
| Whole Apple Powder | Agvest/Nigara 425175-03 A-120 | 25.20 |
| Salt | Mortons 1 7B5BA1 non iodized | 0.79 |
| Cinnamon | Korgers Ground Aug 09 08GB McMeil Nutritionals PPC | 2.27 |
| Splenda | 72460 8724611 | 2.15 |
| Butter Flavor | Butter Buds TPK213A | |
| Granules | Cumberland Packing Co | 0.23 |
| Dark Brown Sugar | Domino 49200 05791 | 2.87 |
| Domino Sugar | Domino 04-655302-11/03 | 2.73 |

(continued)
EXAMPLE No. 5

| Ingredients | Mfg. and Ref # | 5 Dry Wt. % |
|---|---|---|
| Tapioca Starch <30 mesh | Kraft KFI 11800 80000 | 31.83 |
| Potato Starch | Avebe Native Potato Starch* | 13.64 |
| *Not pre-gelatinized | | |

## Claims

1. A snack chip comprising:

   a) from 10% to 50% of dehydrated fruit material;
   b) from 0% to 25% oatmeal;
   c) from 30% to 90% of starch material made from materials selected from the group consisting of tapioca, rice and mixtures thereof;
   d) from 0.1 % to 5.0% water; and
   e) from 1% to 20% of optional ingredients; and

   wherein at least about 40% of the starch material is pre-gelatinized.

2. The snack chip of claim 1 wherein the chip is made by combining dry ingredients with water to form a dough which is then sheeted, dried without the use of a heated extruder to form a half product which is cooked to form the snack chip.

3. The snack chip of claim 1 wherein the dehydrated fruit material is selected from the group consisting of apple based flour, strawberry based flour, banana based flour, pear based flour, apricot based flour, cranberry based flour, any dry fruit with sugar content less than about 80%, and mixtures thereof.

4. The snack chip of claim 2 wherein the dehydrated fruit material is dried to a moisture content of less than about 15%, by weight.

5. The snack chip of claim 2, wherein the water content is from 18% to 35%, and preferably from 22% to 30%, by weight of the dough.

6. The snack chip of claim 1, which further comprises an emulsifier in a concentration of from 0.5% to 8%, preferable from 2% to 7%, and more preferably from 3% to 5%, by weight of the dough.

7. The snack chip of claim 2 which is fried in oil, and wherein the snack chip has from 0 grams to 11 grams of fat per 28 grams of chips, and more preferably less than about 5 grams of fat per 28 grams of chips.

8. The snack chip of claim 2 which is fried in oil, and wherein the snack chip has a density of from 0.3 to 1.0g/ml, preferably from 0.4 to 0.9, and more preferably from 0.4 to 0.8 g/ml.

9. The snack chip of claim 2, which is dried using microwave heating and then fried to a density from 0.4 to 1.0 g/ml.

## Patentansprüche

1. Snackchip, umfassend:

   a) 10 % bis 50 % dehydratisiertes Fruchtmaterial,
   b) 0 % bis 25 % Hafermehl,
   c) 30 % bis 90 % Stärkematerial aus Materialien, die ausgewählt sind aus der Gruppe bestehend aus Tapioka, Reis und Mischungen davon,
   d) 0,1 % bis 5,0 % Wasser und
   e) 1 % bis 20 % fakultative Inhaltsstoffe und

wobei mindestens ungefähr 40 % des Stärkematerials vorgelatiniert sind.

2. Snackchip nach Anspruch 1, wobei der Chip hergestellt wird, indem trockene Inhaltsstoffe mit Wasser vermischt werden, um einen Teig zu bilden, der dann ausgerollt wird, ohne Verwendung eines Wärmeextruders getrocknet wird, um ein Halbprodukt zu bilden, das dann gegart wird, um den Snackchip zu bilden.

3. Snackchip nach Anspruch 1, wobei das dehydratisierte Fruchtmaterial ausgewählt ist aus der Gruppe bestehend aus Mehl auf Apfelbasis, Mehl auf Erdbeerbasis, Mehl auf Bananenbasis, Mehl auf Bimenbasis, Mehl auf Aprikosenbasis, Mehl auf Cranberrybasis, getrocknetem Obst mit einem Zuckergehalt von weniger als ungefähr 80 % und Mischungen davon.

4. Snackchip nach Anspruch 2, wobei das dehydratisierte Fruchtmaterial auf einen Feuchtigkeitsgehalt von weniger als ungefähr 15 Gew.-% getrocknet ist.

5. Snackchip nach Anspruch 2, wobei der Wassergehalt 18 Gew.-% bis 35 Gew.-% und vorzugsweise 22 Gew.-% bis 30 Gew.-% des Teigs beträgt.

6. Snackchip nach Anspruch 1, der ferner einen Emulgator in einer Konzentration von 0,5 Gew.-% bis 8 Gew.-%, vorzugsweise von 2 Gew.-% bis 7 Gew.-% und stärker bevorzugt von 3 Gew.-% bis 5 Gew.-% des Teigs umfasst.

7. Snackchip nach Anspruch 2, der in Öl frittiert ist, und wobei der Snackchip 0 Gramm bis 11 Gramm Fett pro 28 Gramm Chips und stärker bevorzugt weniger als ungefähr 5 Gramm Fett pro 28 Gramm Chips aufweist.

8. Snackchip nach Anspruch 2, der in Öl frittiert ist, und wobei der Snackchip eine Dichte von 0,3 bis 1,0 g/ml, vorzugsweise von 0,4 bis 0,9 und stärker bevorzugt von 0,4 bis 0,8 g/ml aufweist.

9. Snackchip nach Anspruch 2, der mittels Mikrowellenerwärmung getrocknet und dann auf eine Dichte von 0,4 bis 1,0 g/ml frittiert ist.

## Revendications

1. Amuse-gueule comprenant :

   a) de 10 % à 50 % de matériau de fruit déshydraté ;
   b) de 0 % à 25 % de farine d'avoine ;
   c) de 30 % à 90 % de matériau d'amidon fabriqué à partir de matériaux choisis dans le groupe constitué du tapioca, riz et leurs mélanges ;
   d) de 0,1% à 5,0% d'eau; et
   e) de 1 % à 20 % d'ingrédients facultatifs ; et

   dans lequel au moins environ 40 % du matériau d'amidon est pré-gélatiné.

2. Amuse-gueule selon la revendication 1, où l'amuse-gueule est préparé en combinant des ingrédients secs avec de l'eau de façon à former une pâte qui est ensuite abaissée en feuille, séchée sans l'utilisation d'une extrudeuse chauffée de façon à former un produit semi-fini qui est cuit pour former l'amuse-gueule.

3. Amuse-gueule selon la revendication 1, dans lequel le matériau de fruit déshydraté est choisi dans le groupe constitué de farine à base de pomme, farine à base de fraise, farine à base de banane, farine à base de poire, farine à base d'abricot, farine à base de canneberge, n'importe quel fruit sec avec une teneur en sucre inférieure à environ 80 %, et leurs mélanges.

4. Amuse-gueule selon la revendication 2, dans lequel le matériau de fruit déshydraté est séché à une teneur en humidité inférieure à environ 15 % en poids.

5. Amuse-gueule selon la revendication 2, dans lequel la teneur en eau va de 18 % à 35 %, et de préférence de 22 % à 30 % en poids de la pâte.

**6.** Amuse-gueule selon la revendication 1, qui comprend en outre un émulsifiant en une concentration allant de 0,5 % à 8 %, de préférence de 2 % à 7 %, et plus préférablement de 3 % à 5 % en poids de la pâte.

**7.** Amuse-gueule selon la revendication 2, qui est frit dans l'huile, et où l'amuse-gueule a de 0 gramme à 11 grammes de matière grasse par 28 grammes d'amuse-gueules, et plus préférablement moins d'environ 5 grammes de matière grasse par 28 grammes d'amuse-gueules.

**8.** Amuse-gueule selon la revendication 2, qui est frit dans l'huile, et où l'amuse-gueule a une masse volumique allant de 0,3 à 1,0 g/mL, de préférence de 0,4 à 0,9, et plus préférablement de 0,4 à 0,8 g/mL.

**9.** Amuse-gueule selon la revendication 2, qui est séché en utilisant un chauffage par micro-ondes, puis frit à une masse volumique allant de 0,4 à 1,0 g/mL.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4889730 A
- US 5085884 A, Young
- US 5422131 A, Elsen
- US 6558730 B, Gizaw
- US 9507610 W
- WO 9601572 A
- US 3626466 A, Liepa

### Non-patent literature cited in the description

- AOAC International. AOAC International, 2000, 922.06, 954.02